# EUROPEAN PATENT APPLICATION

(11) **EP 1 056 238 A2**
(43) Date of publication of application: **29.11.2000**
(21) Application number: 00304059.9
(22) Date of filing: 15.05.2000
(51) Int. Cl.: H04L 1/16

(54) **Error recovery method for improving throughput in a communication channel**

(30) Priority: 25.05.1999 US 318653
(71) Applicant: LUCENT TECHNOLOGIES INC., Murray Hill, New Jersey 07974-0636 (US)
(72) Inventor: Cloutier, Joseph E., Cedar Knolls, New Jersey 07927 (US); Knisely, Douglas N., Wheaton, Illinois 60187 (US); Kumar, Sarath, Eatontown, New Jersey 07724 (US); Nanda, Sanjiv, Clarksburg, New Jersey 08510 (US)
(74) Representative: Watts, Christopher Malcolm Kelway, Dr.

(57) **Abstract**

A method for improving the throughput of a communication system by decreasing the amount of time it takes to retransmit information determined to have been erroneous. Information received by an equipment is decoded and subjected to error detection techniques. The equipment performs a data puncture operation on the received information it is currently transmitting to request a retransmission of such received information.

## Description

### Background of the Invention

### Field of the Invention

The present invention generally relates to methods for error recovery of information conveyed though communication channels and in particular to an error recovery method for improving throughput.

### Description of the Related Art

Communication systems comprise equipment that convey (i.e., transmit and receive) information via communication channels. The communication channels are implemented in well known fashions with the use of various types of media such as fiber optic cables, coaxial cables, copper wire pairs, air and any combination thereof. Many communication systems convey the information as blocks of information bits or symbols sometimes referred to as frames. In any communication system, the communication channels have distorting effects which cause errors to occur in the information being conveyed. The distorting effects are well known anomalies that exist in communication channels. Examples of distorting effects are multipath distortions, amplitude distortion, phase jitter and frequency translation. Many communication systems include, as part of their protocol, error recovery techniques that detect the occurrence of errors and cause any block of information determined to be erroneous to be retransmitted. A protocol is a set of rules that define how communication between users of a communication system and/or between equipment of a communication system is initiated, maintained and terminated. Protocols are often well established standards with which many communication systems comply.

Because the error recovery techniques require detection of erroneous blocks of information and the retransmission of those blocks, the throughput of the communication system is adversely effected particularly for communication systems with poor communication channels in which a relatively high percentage of the blocks of information are adversely affected.

The throughput is defined as the amount of information successfully conveyed (i.e., errorless blocks of information) for a certain period of time. The throughput is a measure of the efficiency of a communication channel. For example, for a certain period of time 15 blocks of information we transmitted and 12 of the 15 blocks are actually successfully conveyed because the remaining 3 block then have to be retransmitted resulting in degraded throughput.

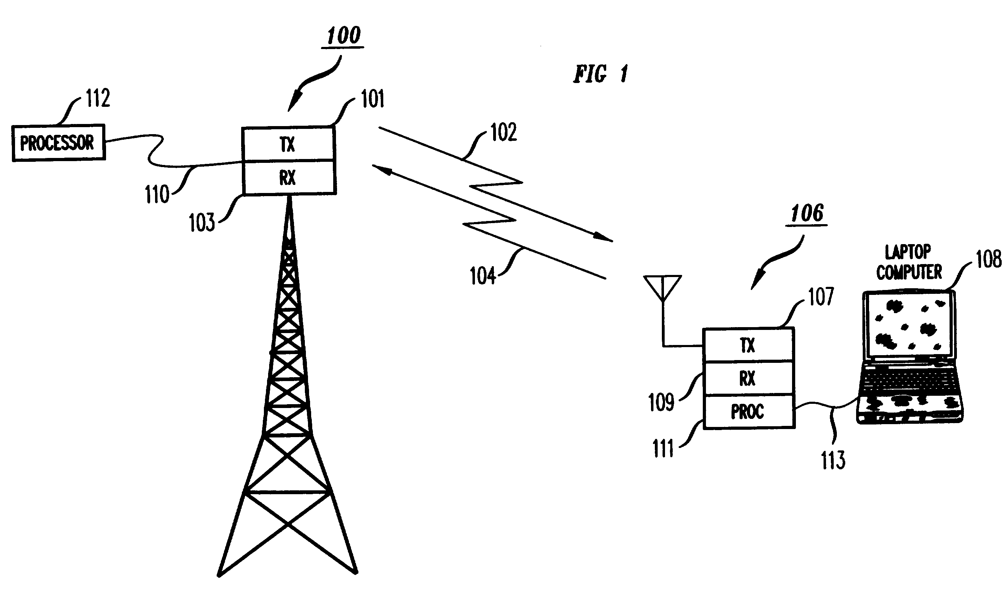

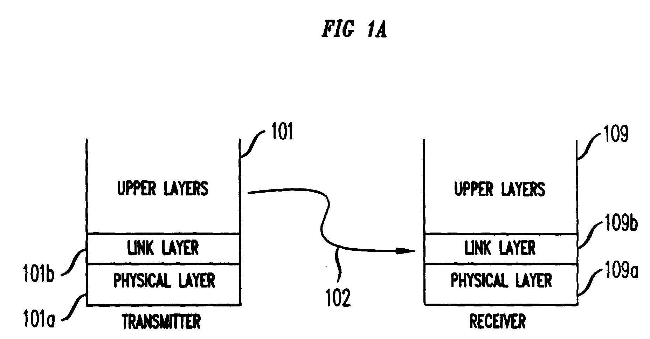

The detection of erroneous blocks and their retransmission are part of an error recovery procedure typically used by communication systems. Referring to FIG. 1, there is shown part of a wireless communication system comprising network equipment 100 and user equipment 106. For wireless communication systems, the user equipment is commonly referred to as mobiles. Network equipment 100 comprises transmitter 101, receiver 103 both of which are coupled to processor 112 via communication link 110. Network equipment 100 and other network equipment (not shown) are owned, operated and controlled by the service provider (owner of all network equipment that make up the communication system). For wireless communication systems, network equipment 100 is often referred to as a base station. User equipment 106 comprises transmitter 107, receiver 109 and processor 111, all of which are coupled to user device (e.g., laptop computer, cellular phone, facsimile machine) 108 via communication link 113. Alternatively, the device 108 can be embedded in equipment 106. Equipment 106 is often called a mobile radio but equipment 106 can also represent stationary equipment. Network equipment 100 transmits communication signals-- typically in the form of Radio Frequency (RF) signals-- to user equipment 106 via communication channel 102 (also called a forward link). Network equipment 100 receives communication signals (typically RF signals) from user equipment 106 via communication channel 104 (also called a reverse link).

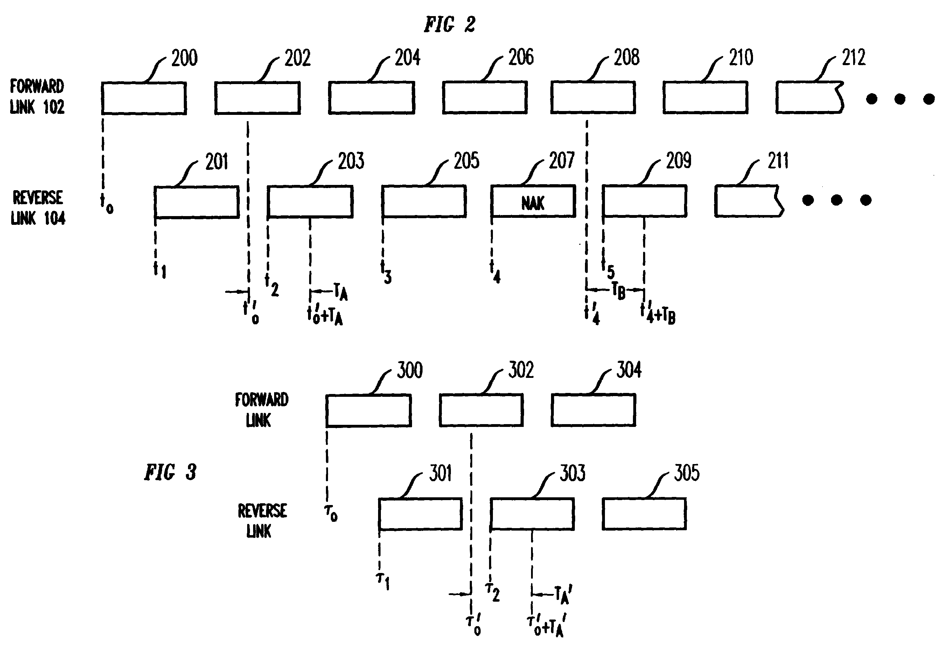

The error recovery technique applied by communication systems such as the one described above is depicted in FIG. 1A and FIG. 2. A standard method for implementing error recovery procedures is the well known Automatic Retransmission reQuest (ARQ) which is described infra.

The portions of a protocol relating to transmission and/or reception of information are typically implemented using a layered architecture called a protocol stack. The protocol stack is a symbolic representation of network and user equipment where the functions performed by such equipment are represented as layers stacked on top of each other. For purposes of this invention the two bottom most layers will be discussed. The lowest layer commonly called the physical layer, deals with the processing of units of information (e.g., bits) and the control of the hardware (e.g., wires, cables, hardware interfaces) that interconnect network and/or user equipment. The next to lowest layer, the Link layer, is concerned with the manipulation and/or processing of blocks of information; the manipulation and processing are typically done in accordance with the well known procedures and protocols. Correspondingly, the error recovery technique is implemented with multiple layers.

FIG. 1A shows the bottom two layers (called Physical layer and Link layer) of the stack for transmitter 101 of network equipment 100 and receiver 109 of user equipment 106 of a communication system which complies with the well known IS-95 standard for a CDMA system. For such a system, the information is conveyed as blocks of information called frames. Information to be transmitted by transmitter 101 flows downwards from the upper layers and ultimately to physical layer 101a as the processing at the different layers of the stack is performed. When the information to be transmitted is passed to Link layer 101b from the upper layers, Link layer 101b divides the information into blocks, assigns a sequence numbers to each of the blocks and passes the resulting blocks of information (along with the sequence numbers) to physical layer 101a. The sequence numbers are simply indicators of the proper ordering of the information blocks. Physical layer 101a performs the proper functions to prepare the information for transmission and to cause the information to be transmitted via forward link 102. One well known method for preparing information to be transmitted is to add Forward Error Correction codes (FEC) to such information. Such a code adds redundant data to the information making such information better able to withstand the distorting effects of forward link 102.

At receiver 109, the transmitted information first enters physical layer 109a. The information flows upward at receiver 109 and is processed as it passes from layer to the next higher layer. The redundant data added to the transmitted information is used by physical layer 109a to correct errors caused by distorting effects of forward link 102. Physical layer 109a uses well known decoding procedures to decode the received information. Physical layer 109a then performs a CRC procedure to determine whether the integrity of the received information is such that the information has to be retransmitted. If the received information passes the CRC procedure, the received information is passed to Link layer 109b; otherwise the received information is not processed any further and is discarded.

Link layer 109b uses the sequence numbers of the received information to determine when a retransmission is needed. In particular, Link layer 109b uses the sequence numbers of the frames it receives from Physical layer 109a to identify the loss of frames (i.e., discarded frames due to CRC failure) and ask for their retransmissions. For new frames, the loss is detected if a new frame with higher sequence number arrives. For example, if the receiver Link layer 109b received frames 1 through 7 and then receives frame numbered 10, it detects the loss of frames 8 and 9. Receiver 109 then sends a Negative Acknowledge (NAK) message indicating that the last block of information sent was erroneous and requesting that this information (frames 8 and 9) be retransmitted. For retransmitted frames, the loss is detected if the number of new frames received since a NAK was sent exceeds a threshold. Thus, continuing with the example described above for new frames, if retransmitted frames 8 and 9 are not received after a certain number or threshold number (defined by the network provider) of new frames have been received, the system concludes that the retransmitted blocks of information were lost. This threshold is typically of the order of a round trip time, i.e., the time it takes for a frame to be transmitted, received and processed and a responding frame to be sent back, received and processed. Note that since this error recovery scheme is based on new frames that are received correctly at the Link layer, the frame loss detection times (i.e., the time it takes to determine that a frame loss occurred) can be relatively long when a relatively high number of frame are lost. Relatively long frame loss detection times in many cases trigger time-outs at the higher layers; these time-outs are typically used by the higher protocol layers as an indication of congestion in the network and hence result in their throttling the transmission rate at the source. This results in lower system throughputs.

Referring to FIG. 2 there is shown an ARQ error recovery procedure used by the communication system depicted in FIG. 1. For ease of explanation, the communication system is again a Code Division Multiple Access (CDMA) wireless communication system in which information is conveyed in the form of frames all of which are transmitted at defined times and are substantially the same length. Frames 200, 202, 204, 206, 208, 210, 212 and so on are transmitted by transmitter 101 over forward link 102. Frames 201, 203, 205, 207, 209, 211 and so on are transmitted by transmitter 107 over reverse link 104.

It should be noted that the frames in the reverse link need not be the same length as the frames in the forward link. It should further be noted that the frames in the reverse link can be aligned in time (i.e., synchronized) with the frames in the forward link. When the length of the frames in the reverse link is different from the length of the frames in the forward link, there is a one-to-one mapping of the information residing in the frames to ensure that all of the portions of the information are received in the proper order. Transmitter 101 begins to transmit frame 200 at time t₀ and transmitter 107 begins to transmit frame 201 at time t₁. It is clear that at some point both transmitters (TX 107 and TX 101) are transmitting at the same time. Frame 200 is completely received at time t'₀ which is shown as occurring prior to time t₂ which is when the transmission of frame 203 starts. It should be noted that t'₀ can also occur after time t₂.

When the transmitted information is received (e.g., frame 200 is received by receiver 109 and frame 201 is received by receiver 103) the processing equipment at each respective site perform the proper processing and decoding to retrieve the information. Applying the ARQ error recovery procedure from the standpoint of user equipment 106, frame 200 is received by receiver 109, decoded and processed by PROC 111 at time t'₀ + T_{A} where T_{A} is the amount of time elapsed during the processing of frame 200 by PROC 111. The decoding and processing include error detection techniques performed by Link layer 109b of FIG. 1A. If frame 200 is in error, then user equipment 106, in accordance with the error recovery procedure, informs network equipment 100 of such an occurrence by transmitting a Negative Acknowledge (NAK) message (i.e., frame 207), i.e,. TX 107 transmits a NAK message.

It should be noted that user equipment 106 at best could inform network equipment 100 that frame 200 was bad at time t₄, i.e., at the beginning of the next available frame which is frame 207 since frame time 205 is used to process frame 202. Reception of frame 207 is completed at time t'₄ which is shown as occurring prior to time t₅ but can also occur after time t₅; t₅ is the time when TX 107 starts to transmit frame 209. After propagation delays and processing delays, network equipment 100 receives and decodes the NAK frame at time t'₄ + T_{B}; T_{B} is the amount of time elapsed during the processing of frame 207.

In accordance with the ARQ error recovery procedure, network equipment 100 retransmits the information (originally in frame 200) with frame 210. Therefore, after frame 200 was originally transmitted, the procedure allowed it (i.e., frame 200) to be retransmitted five frames later. Moreover, the scenario described above is a best case scenario wherein a transmitter is able to transmit a NAK or an ACK message at the very next available frame. In many cases, the next available frame occurs many frame times later adding further delay in the retransmission. Also, many times network equipment such as that shown in FIG. 1 experiences significant processing delays because Processor 112, for example, is not co-located with transmitter 101 and receiver 103 thus causing delays to occur as a result of signals being conveyed over communication link 110 (commonly called a back haul channel). Processing delays also occur simply from the length of time it takes to process incoming frames; such processing delays occur at both network equipment and user equipment. For frames that have to be retransmitted , the detection and retransmission delays may be more serious than the delays for new frames.

What is therefore needed is an error recovery technique that decreases the amount of time it takes to retransmit an erroneous block of information (e.g., a bad frame) thus improving the throughput of the communication channels through which the information is being conveyed.

### Summary of the Invention

The present invention provides a method for error recovery of information conveyed in a communication channel of a communication system. Network equipment or user equipment comprising a transmitter, receiver and processing equipment receive information typically in accordance with a protocol being followed by the communication system. The transmitted information contains feedback that indicates whether information previously received by an equipment was erroneous and that such information is to be retransmitted.

A frame transmitted through a Forward link by network equipment, for instance, contains higher layer data that is to be transmitted to the mobile as well as feedback or decode status data about a frame most recently decoded by the base-station. The feedback indicates to the transmitter whether or not the frame it transmitted N frames earlier is decoded correctly by the receiver. Note that the transmitter needs to have a precise knowledge of N so it can interpret the feedback it receives. N is a function of the propagation and processing delays which can be either specified in the protocol being followed by the communication system or can be adaptively learned (through the used of well known adaptive algorithms) by the transmitter. If the feedback indicates that the previous frame was received incorrectly the equipment retransmits that previous frame. The equipment then decodes the rest of the received information and performs error detection operation (e.g., CRC operation) on the received information. Based on the result of the error detection operation, the equipment inserts decode status data (i.e., data puncture) into information currently being transmitted by the equipment or into the next block of information to be transmitted by the equipment. The decode status data indicate if the received information is correct or erroneous and is to be retransmitted. Because the equipment is able to generate a request for retransmission of the received information and transmits that request without having to wait for a next available block, the delay incurred in retransmitting the received information is decreased thus improving significantly the throughput of the communication channel through which information is conveyed. Moreover, the feedback information is transmitted and processed at the Physical layer. This further reduces the detection delays compared to the current Link layer error recovery procedure.

Therefore, the present invention provides a method for improving throughput of a communication system comprising: an equipment waiting for incoming information which information comprises feedback. The equipment receives the incoming information and extracts the feedback from the received information. The feedback is processed to determine whether there is an indication that information previously transmitted by the equipment is requested to be retransmitted. If so, the previous information is retransmitted by the equipment. The equipment then performs error detection operations on the received information to determine whether the received information is erroneous. Based on the result of the error detection operation, the equipment inserts decode status data (i.e., performs data puncture operation) into information that it is currently being transmitted by the equipment which decode status data indicate whether the received information is in error and is to be retransmitted.

### Brief Description of the Drawings

FIG. 1 depicts part of a wireless communication system;
FIG. 1A depicts symbolic representation of network and user equipment;
FIG. 2 depicts how frames are conveyed over forward and reverse links of a communication system that uses a standard error recovery technique;
FIG. 3 depicts how the present invention is applied to a communication system in which information is conveyed in the form information blocks;
FIG. 4 depicts the method of the present invention.

### Detailed Description

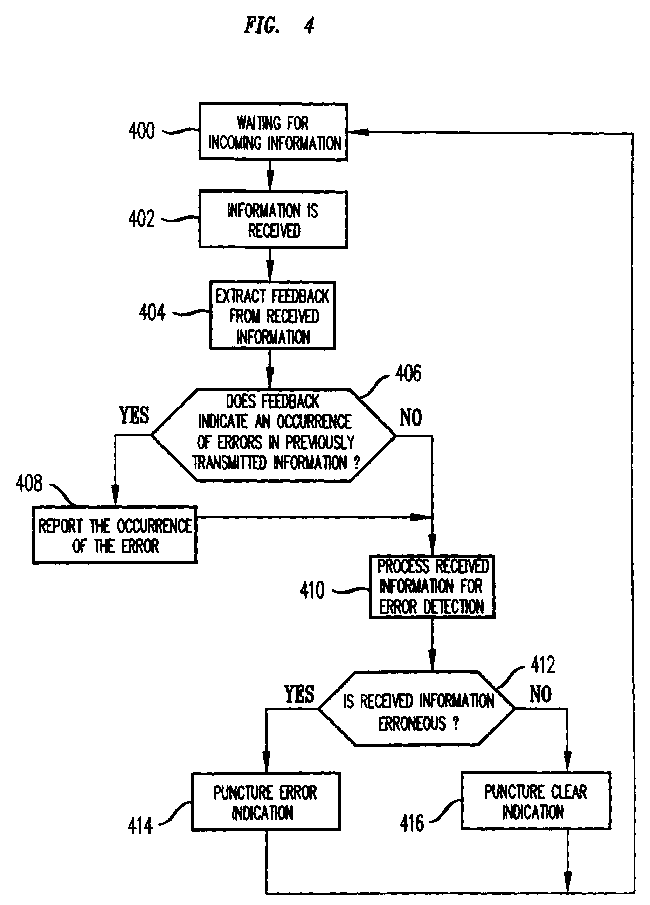

Referring to FIG. 4, there is shown the method of the present invention which will be described from the standpoint of user equipment 106 with reference to FIGS. 1 and 3. RX 109 of user equipment 106 receives information block 300 over forward link 102. Network equipment 100 begins to transmit information block 300 at time τ₀. At time τ₁ user equipment 106 begins to transmit frame 301. Received information block 300 contains feedback or error correction data which is extracted by PROC 111 to determine if any previous information transmitted by user equipment 106 is to be retransmitted. PROC 111 processes information block 300 (i.e., performs error detection operations) to detect whether or not received information block 300 is erroneous. Based on the processing by PROC 111, the appropriate decode status data is inserted into information currently being transmitted by user equipment 106 reducing the time it takes for information block 300 to be retransmitted thus improving the throughput of forward link 102. The insertion of decode status data into information being transmitted is called data puncture. The decode status data is interpreted as feedback by the equipment which receives the information being transmitted.

For ease of explanation the method of the present invention is described as being part of a CDMA wireless communication system complying with a Radio Link Protocol (RLP) that is part of the well known IS-707 standard. It will be readily obvious that the method of the present invention applies to other types of wireless communication systems such as Time Division Multiple Access (TDMA) systems. The present invention also applies to wireline communication systems such as Hybrid Fiber Coax (HFC) systems or copper wire telephony systems such as the well known Public Switched Telephone System (PSTN) or Synchronous Optical Network (SONET) systems that use a FEC technique. In step 400, user equipment 106 and in particular, RX 109 and PROC 111 monitor forward link 102 waiting for any incoming signal. The monitoring of forward link 102 is done in accordance with the protocol being followed by the communication system. In step 402 RX 109 receives information block 300 transmitted by TX 101. User equipment 106 transfers information block 300 to PROC 111 which processes the information block including decoding the information. Information block 300 contains information being conveyed between, for example, two users or between a user and network equipment. Information block 300 further contains feedback in accordance with the present invention. Feedback or error correction data is defined as information coded to indicate whether information previously transmitted by an equipment is erroneous. The previous information need not be the very last information block that was transmitted but, in general, can be the information transmitted N information blocks previously where N is an integer equal to or greater than 1. For the example being discussed, the feedback received by user equipment 106 indicate whether a block of information previously transmitted (N blocks earlier or 1 block earlier) by TX 107 was erroneous. Error correction data or feedback is represented in the form of a bit, a string of bits or in any other well known fashion.

In step 404, PROC 111 extracts the feedback from information block 300. The extraction of the feedback involves removing a portion of the information from a defined location within the received information block. In particular, at a defined location in information block 300, a portion of the block is extracted. The extracted portion can be a bit, a string of bits or a block of data representing feedback. The location of the feedback within the received block of information can be defined, for example, by an accepted standard. For example, for a CDMA wireless communication system, the error correction data is located in a certain portion of a frame reserved for control information, i.e., information defined by an accepted standard for operating and controlling network equipment.

In step 406, the decoding of the feedback is performed by PROC 111 which then determines whether the decoded feedback indicate that user equipment 106 is to retransmit the last block (or N blocks earlier) of information it transmitted over reverse link 104. If the feedback indicate that an error occurred in the last block (or N blocks earlier) of information that was transmitted by user equipment 106, the occurrence of such an error is reported and acknowledged (from PROC 111 to TX 107) in step 408 and indeed the last block transmitted (or block transmitted N blocks earlier) by user equipment 106 is retransmitted at the proper time. In particular, PROC 111 causes TX 107 to retransmit the last block of information (i.e., information block 301) transmitted by user equipment 106 or block of information transmitted N blocks earlier.

Regardless of whether there is a retransmission request, the method of the present invention moves to step 410 where user equipment 106 performs error detection operations on the received information block; that is, PROC 111 performs error detection operations on received information block 300. Note that user equipment 106 completely receives information block 300 at time τ'₀. Although τ'₀ is shown occurring prior to τ₂ (i.e., start of transmission of frame 303), it can also occur after or at time τ₂. Error detection operations are well known detection techniques whose results are used by communication equipment to determine the integrity of received information after such information has been subjected to the distorting effects of a communication channel. One well known error detection technique is called Cyclic Redundancy Check (CRC). At time τ₂ + T'_{*A*} PROC 111 has extracted feedback and has performed error detection operation on the received information block. Also at time τ₂ + T'_{*A*} , TX 107 is transmitting frame 303. T'_{*A*} represents the amount of time it takes for user equipment 106 (i.e., PROC 111) to process (i.e., decode and perform error detection operations) information block 300.

In step 412, PROC 111 determines whether the received block of information is erroneous based on the result of the error detection operation performed in step 410. If PROC 111 determines that the received information block is erroneous the method of the present invention moves to step 414 where PROC 111 performs a data puncture operation on information block 303. A data puncture operation is the insertion of decode status data into a block of information that is currently being transmitted or the very next block of information that is to be transmitted. In particular, PROC 111 inserts decode status data in information block 303 which decode status data is coded to be interpreted by network equipment 100 as a request for network equipment 100 to retransmit information block 300. The decode status data indicates whether or not the received information is in error. The location within a frame (or a block of information) of the decode status data is specifically reserved and defined, for example, by an accepted standard. The insertion of the decode status data can also be based on an algorithm that determines the actual location of such data within the frame being transmitted. Thus, the decode status data need not be inserted at the same location each time a data puncture operation is performed. Some communication systems use data puncture operations for other purposes such as power control. In such systems, the method of the present invention can redefine part of an existing puncturing procedure to take advantage of a system architecture which already uses data puncturing. It should be noted that the decode status data is interpreted by network equipment 100 as feedback. Therefore, network equipment 100 receives information block 303, decodes information block 303, extracts and decodes the feedback and retransmits (if so requested by the decoded feedback) the information (originally in frame 300) in information block 304. To significantly reduce the probability of errors occurring in the punctured data itself, the inserted data (i.e., decode status data), for example, is transmitted at higher power levels than the rest of the information or another possible technique is to insert the data at multiple locations. Therefore, comparing FIG. 3 to FIG. 1, it is clearly seen that the method of the present invention allows an erroneous block of information to be retransmitted with a one block delay (instead of after five or more block delays) significantly improving the throughput of the communication channels (e.g., forward link 102, reverse link 104 of FIG. 1) and thus the throughput of the communication system. If received information block 300 is determined not to be erroneous, the present invention moves to step 416 where PROC 111 inserts "clear" decode status data in information block 303 indicating that the received information is not erroneous. The decoded information is transferred to user device 108 (e.g,. laptop computer, cellular phone, facsimile machine) and the method of the present invention returns to step 400 and waits for the next incoming information block.

## Claims

1. An error recovery method for improving throughput of a communication system, the method comprising:
receiving a signal comprising information; and CHARACTERIZED BY THE STEP OF
performing data puncture operations on information being transmitted by the communication system based on the information of the received signal.
